(19) **Europäisches Patentamt**

**European Patent Office**

**Office européen des brevets**

(11) **EP 1 014 287 A2**

(12) **EUROPEAN PATENT APPLICATION**

(43) Date of publication:
28.06.2000 Bulletin 2000/26

(51) Int. Cl.⁷: **G06F 17/60**

(21) Application number: **99204285.3**

(22) Date of filing: **13.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.12.1998 US 210708**

(71) Applicant:
**GENERAL ELECTRIC COMPANY**
**Fairfield, CT 06431 (US)**

(72) Inventors:
• **Osborn, Brock Estel**
  **Niskayuna, New York 12309 (US)**
• **Hershey, John Erik**
  **Ballston Lake, New York 12019 (US)**

(74) Representative:
**Dunleavy, Kevin James**
**Hunton & Williams,**
**Avenue Louise 326, B6**
**1050 Brussels (BE)**

(54) **Multi-source information fusion system for dynamic risk assessment**

(57)     The invention is useful in a variety of risk assessment contexts, especially contexts involving a large number of variables and risk factors or a large quantity of data to be analyzed for identifying and/or quantifying correlations between variables and risk factors. In one embodiment, a risk assessment system includes a processing unit including a main processor that receives inputs from various sources and provides outputs via various channels. The processing unit also receives inputs from certain internal terminals and interfaces with internal processing and storage elements. Based on various inputs, the processor can access a database coprocessing unit and an analytical tool storage to execute a correlation analysis to identify and/or quantify correlations between certain variables and risk factors. In the case of warranty businesses, such correlations can be used to estimate project claim costs, which costs can then be compensated through appropriate contract pricing.

FIG. 1

## Description

BACKGROUND OF THE INVENTION

The present invention relates in general to risk assessment systems and, in particular, to a method and apparatus for automatically identifying correlations between risk factors and related variables, such that the correlations can be taken into consideration with respect to proposed conduct or events. The invention is especially useful for analyzing and pricing proposed transactions such as in warranty businesses.

Risk assessment systems are used in a variety of business and other private and public contexts. Generally, an important objective of such systems is to analyze certain activities based on known correlations between identified variables and related risk factors. Such correlations can be useful in assessing the risk associated with the activity under consideration so that a determination can be made, for example, as to whether to undertake/allow the activity and/or how to allocate the risk such as through risk-based pricing or establishment of appropriate warranty terms.

The case of the automobile warranty business is illustrative. Warranties are often provided, for example, in connection with automobile purchases. Indeed, the availability of such warranties, and the resulting certainty in overall vehicle use costs, is a significant factor for inducing some consumers to purchase an automobile. In this regard, the warranty may specify that a manufacturer, an underwriter, or some other related party will pay to repair or replace the vehicle under certain circumstances. Such warranties obviously increase costs to the warrantor and this increased cost is generally ultimately reflected in purchase prices, as a separate pricing item or otherwise.

In order for the contract prices to reflect true operating expenses, as may be considered most equitable or sensible, it is desirable to accurately assess the risk associated with a given contract or type or contract. To this end, the warranty cost may be determined by identifying variables associated with a particular contract that correlate to particular risk factors. In the automobile warranty business, examples of such variables include, the make and model of the vehicle, the vehicle miles at contract origin, the deductible under the contract, etc. Examples of risk factors include the frequency and cost for repair/replacement associated with particular types of damage. Thus, for example, a contract price for a particular class of vehicle having higher historical repair costs may reflect such higher costs as a warranty item or otherwise.

Conventionally, the process for identifying such variable/risk factor correlations involves postulating such a correlation, obtaining data relating to the relevant variable and risk factor, and analyzing the data to confirm, quantify and/or refute the postulation. The initial step of postulating a correlation is often based on the professional experience of an analyst. For example, an analyst may postulate that vandalism or attempted theft-related damage will be greater in geographic areas having higher crime rates. Alternatively, a postulation may be based on anecdotal information or third party studies, e.g. Consumer Reports studies for a particular make and model of vehicle. Based on such a postulation, the analyst may acquire data, for example, by accessing a database of archived records for relevant car vehicles and claims. This data may then be provided to a computer system programmed to execute conventional risk analysis routines. The computer system can then conduct an analysis and provide an output that the analyst can use to confirm, quantify or refute the postulation.

Fortunately, there is no dearth of data concerning variables and risk factors. Indeed, the amount of data available continues to grow and therein lies a problem for analysts. Specifically, analysts must determine how best to winnow the data and extract the essential elements of the available information in a timely fashion.

SUMMARY OF THE INVENTION

The present inventors have recognized that conventional risk analysis processes for identifying correlations between variables and risk factors may miss significant correlations and, therefore, fail to allocate risk-related costs or otherwise provide risk-related information in a manner that accurately reflects real world risk. In particular, due to imperfect information and intuition, or simply due to the large numbers of potential variables and risk factors coupled with limited resources, risk analysts may fail to consider potential correlations of certain relevant variable/risk factor pairings. Additionally, the present inventors have recognized that the ready availability of databases of relevant information together with current processing resources, allows for a more complete explication of variable/risk factor pairings and the permutations and combinations thereof. Moreover, through appropriate programming and operation of risk analysis systems in accordance with the present invention, such analysis can proceed substantially continuously and, in many respects, substantially autonomously during a processing time period, thereby allowing for a more full development of correlation data without unduly taxing personnel resources.

According to one aspect of the present invention, a method for use in risk assessment is provided whereby a processing system can automatically select a variable/risk factor pairing. More particularly, the method involves: providing a processing system for identifying correlations between variables and risk factors; receiving variable information and risk factor information; operating the processing system to select at least one of a candidate variable (e.g., an environmental variable such as average minimum temperature for the location/time of automobile operation) and a risk factor (probability of claim relating to a vehicle subsystem such as interior climate and comfort) of a variable/risk factor pairing; operating the processing system to determine whether a potential correlation exists between the candidate variable and candidate risk factor; and providing an output regarding the potential correlation.

The variable and risk factor information can be obtained from any available source or combination thereof including, for example, archived data relating to similar events/transactions and any relevant studies, and may be entered by an operator or automatically accessed by the processing system. Such information may be stored in a proprietary database or publicly available. In the latter regard, such information may be accessed, for example, via a public network such as the Internet. One or both of the candidate variable and candidate risk factor may be selected by the processing system, e.g., based on hardware, software and/or firmware selection logic running on the processor. For example, an operator may select a particular variable (such as operating location or claims adjuster) and instruct the processing system to search for any risk factor correlations (e.g., occurrence of particular types of claims). Alternatively, the operator may select a particular risk factor and instruct the processing system search for correlations to variables. In either such case, the processing system may select the variables/risk factors from a predefined list, at random, or based on engineering, scientific, demographic, psychological, geographic or other factors providing a suspicion that a potential correlation is worth exploring. Preferably, such selection by the processing system is accomplished substantially autonomously by the processing system, e.g., based on execution of pre-programmed selected logic that may include search routines, sort routines and/or iterative processing logos.

It will be appreciated that the designations "variable", "risk factor" and "variable/risk factor pairing" are used to facilitate description of the invention and do not necessarily identify any inherent nature or differences relative to the characteristics under consideration. In this regard, consider the case of an analysis of any correlation between the average minimum temperature and the occurrence of Interior Climate and Comfort (ICC) claims (e.g., air-conditioning/heater repairs). In this context, either characteristic may be deemed a variable and either may be deemed a risk factor. Moreover, it is possible to seek correlations relative to sets and/or subsets of data within a hierarchy, e.g.: to generally consider the ICC system or more specifically the heating or air conditioning sub-systems; to consider minimum temperature for a given day, month or season and in a city state or other locale; and to consider sets and subsets of data in series to progressively verify or quantify a correlation. The above-noted labels will therefore be understood as identifying qualities and combinations or compound predicates thereof (e.g., driver under 25 and male or accidents resulting in vehicle damage in excess of $1000) that may have an interdependence that can be characterized in terms of a useful correlation, even though other factors may need to be considered in making an accurate risk assessment (e.g., traffic conditions in the operating area).

The output may be provided in various forms depending on the specific application. In the case of providing risk assessment information to analysts of a warrantor or underwriter for use in setting pricing or policy, the output may include an electronic or hardcopy report. For example, the report can include graphs, charts, mathematical equations identifying and/or quantifying a correlation or lack thereof. In the case of an electrical output, such output may be transmitted to a display device, database, printing system and/or published over a private or public network. The method of the present invention can further include using the output to implement a risk-based action such as allowing/denying a proposed warranty contract or line of credit, setting a contract price or credit limit, etc.

In one implementation, the processing system is programmed to run substantially continuously during a processing period, for example, until an assigned task is completed or 24 hours a day for an indefinite period of time. That is, the computing system can be programmed to serially analyze different variable risk factor permutations on an automated basis. For example, such processing may be conducted by the processing system in its spare time in the case of a multi-purpose computer and/or concurrent with other processing in the case of multi-tasking functionality. In this manner, the capabilities of the processing system can be efficiently deployed relative to large quantities of available data and myriad correlation possibilities.

A corresponding apparatus in accordance with the present invention includes: a processing system for use in identifying correlations between variables and risk factors; an input system for receiving variable and risk factor information and an output system for providing outputs regarding potential correlations. The processing system is operative for selecting (e.g., iteratively) candidate variables and/or risk factors and determining whether a correlation exists between the candidate variable and risk factor under consideration. The invention thus allows for efficient processing of large amounts of risk assessment data for better identification of risk-related correlations. In this manner, risk-related decisions can be based on a more complete understanding of real world considerations.

BRIEF DESCRIPTION OF THE DRAWINGS

Fig. 1 is a flowchart illustrating a risk analysis process in accordance with the present invention;

Fig. 2 is a block diagram illustrating an overall architecture of a computer processing system in accordance with the present invention;

Fig. 3 is a graph illustrating normal monthly maximum temperatures and interior climate and comfort claim probabilities by month for the state of Arizona;

Fig. 4 is a graph illustrating the relationship between normal monthly maximum temperature data and a temperature model for the state of Arizona;

Fig. 5 is a graph illustrating the relationship between actual interior climate and comfort claims for the state of Arizona by month and the claims predicted by a model in accordance with the present invention; and

Fig. 6 illustrates a trend projection for Florida and Hawaii, the two highest impact states with respect to the risk correlation illustrated in Fig. 6.

DETAILED DESCRIPTION

The present invention is useful in a variety of risk assessment contexts, especially contexts involving a large number of variables and risk factors or a large quantity of data to be analyzed for identifying and/or quantifying correlations between variables and risk factors. Examples of such contexts include various insurance and warranty applications. In the following description, the invention is illustrated with respect to applications in the automobile warranty business. It will be appreciated that the described implementation is provided for purposes of illustrating the invention and certain aspects of the invention are not limited to any such specific context.

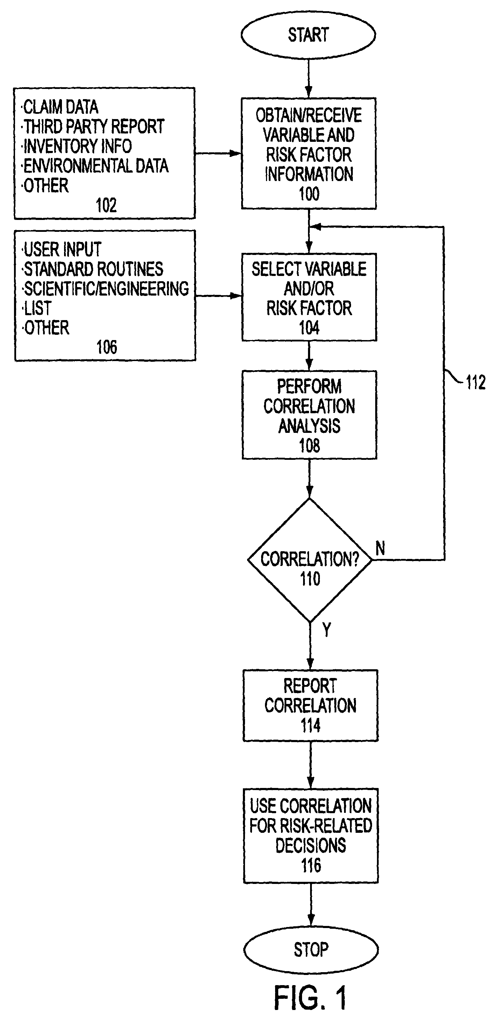

Fig. 1 is a flowchart illustrating a risk analysis process in accordance with the present invention. As will be described in more detail below, various process steps illustrated in Fig. 1 are executed by a processing system and, in some cases, are executed substantially autonomously, such as during time when computing resources might otherwise be idle, so as to efficiently analyze large amounts of data, variables and risk factors for enhanced risk assessment. In addition, it will be appreciated that the sequence of steps in Fig. 1 may be modified in certain respects in accordance with the present invention.

The first step illustrated in Fig. 1 involves obtaining/receiving 100 variable and risk factor information for use in the risk analysis. It will be appreciated that the nature of the information will vary depending on the risk analysis under consideration. Additionally, the types of information may vary broadly even for a single type of analysis.

Box 102 illustrates certain types of input information that may be obtained or received in connection with automobile warranty risk analyses. Generally, such analyses relate to identifying and quantifying correlations between certain types of automobiles under warranty (and use thereof) and the probability of incurring certain types of claims. In this regard, for purposes of risk analysis, an automobile may be thought of as an assembly of major systems such as a basic braking system, a drive system, an interior climate and comfort system and so on. As will be explained in more detail below, such systems may be further broken down into subsystems for a particular risk analysis in order to better evaluate risk.

One such major automobile system that may be the subject of a risk analysis is the interior climate and comfort (ICC) system. The ICC system generally includes the heating and air conditioning subsystems. Specific components within the subsystems include the following:

- compressor
- compressor mounting bracket
- clutch and pulley
- orifice tube
- condenser
- heater core
- heater control valve
- receiver/dryer
- evaporator
- air duct and outlets
- accumulator
- air conditioner temperature control program
- seals and gaskets

Thus, the risk factors that may be considered with respect to an ICC risk analysis may relate to the probability and expense associated with a claim for any such components, e.g., repair or replacement of the component.

It is possible that many different types of variables may have an effect on these risk factors. Such variables are not necessarily obvious or intuitive and, indeed, identifying such variables is one aspect of the present invention. Examples of variables that may be considered may include: environmental factors such as average temperatures at the date and region of vehicle operation of the; vehicle/related factor such as the make, model, age and mileage of the vehicle; demographic factors such as the gender and age of the driver; and personnel factors such as the experience and past performance of a claims adjuster. The present inventors have recognized that it is possible that other variables that may not occur to an analyst may prove to provide meaningful risk analysis correlations. It will therefore be appreciated that an exhaustive listing, even for a particular application, cannot be provided. The sources and nature of the input information relating to the variables and risk factors can also vary significantly. With regard to the auto warranty business, examples of information sources include such things such as:

> 1. developed claim data, such as a database of claim reports or information derived therefrom;
> 2. anecdotal information such as reported in commercial news publications such as "Automotive News";
> 3. Society of Automotive Engineers (SAE) Scientific and Engineering Reports;
> 4. J.D. Powers and <u>Consumer Report</u> studies;
> 5. ever changing mixes of make/model/ages of vehicles in inventory; and
> 6. environmental variables such as state temperature profiles, precipitation data, use of road salt in winter time, average relative humidity, population in major cities and so on.

Such information may be received or obtained in a variety of ways. For example, any of the above types of information may be manually entered by an analyst into the risk analysis processing system. Alternatively, some of this information, such as a database of claims data, may be available via an internal company network for access by the processing system. Other information, such as environmental variables, are available via a large number of public and private sources. In this regard, public information may be accessed by an analyst via the Internet and then downloaded into the risk analysis processing system. Moreover, the processing system may be programmed to utilize search tools to substantially autonomously retrieve such information via the Internet.

The nature of the input information can also vary significantly. For example, data concerning automobiles have at least five distinct genres:

> 1. <u>numerical and quasi continuous</u> -- such as adjuster's number of years in current position or vehicle miles.
> 2. <u>numerical multi-level discrete</u> -- such as deductible;
> 3. <u>numerical fuzzy discrete</u> -- such as mileage at failure, e.g., HIGH, MEDIUM, LOW;
> 4. <u>binary</u> -- such as a new or used indicator; and
> 5. <u>class identification</u> -- such as vehicle make.

It will be appreciated that conventional analytical tools are capable of performing risk analyses based on data of such differing natures. As will be understood from the description below, the processing system of the present invention is capable of identifying such differing types of data and formatting and otherwise providing such data to appropriate analytical tools for identifying risk relation correlations.

The risk analysis process further involves selecting (104) a variable and risk factor pairing for correlation analysis. In this regard, it will be appreciated that variables and risk factors do not generally constitute a two parameter system. That is, a particular risk factor may be affected by multiple variables and/or a single variable may affect multiple risk factors. Accordingly, references herein to variable and risk factor pairings should not be thought of as two parameter systems and each of the variables and risk factors may, in fact, constitute compound groupings of parameters.

In accordance with the present invention, the processing system can select the variable and risk factor pairing for a given analysis. In this regard, the processing system may select one of the variable and risk factor of the pairing or both of the variable and risk factor. Thus, for example, the processing system may be instructed to seek variables having a relationship to a particular risk factor such as risk of an ICC claim. Alternatively, the processing system may seek risk factors having a correlation to a particular variable such as the use of road salt. As a further alternative, the processing system may be utilized to select both the variable and risk factor to identify previously unconsidered correlations.

The selection process may proceed in various ways as generally indicated at block 106. As illustrated, the selection process may be partially based on a user input. For example, as part of a review of claims adjuster performance, the analyst may instruct the processing system to identify any claims correlations for a particular adjuster. Alternatively, as part of a profitability analysis, an analyst may instruct the processing system to identify claims correlations for a particular type of vehicle. In such cases, the processing system may select variables and/or risk factors having a relevant correlation.

The selection process need not be based on any specific user input. Indeed, one advantage of the present invention is that the processing system can be programmed to function substantially autonomously, e.g., based on preprogrammed routines without specific, contemporaneous operating instructions from a user. In this manner, correlation searches can be executed as a background function and/or as processing resources are available.

Such substantially autonomous selection can be conducted on various bases. For example, selection may be accomplished based on certain standard routines. Thus, in connection with a claims adjuster performance analysis routine, the processing system may serially select certain variables and risk factors to identify any correlations relative to an identified claims adjuster. Similarly, as part of a profitability analysis, a particular make and model of vehicle may be analyzed relative to a routine set of claim types to identify chronic problems.

The selection process may also be based on established scientific and engineering principles for identifying suspected variable and risk factor pairings. For example, based on scientific or engineering principles relating to the effect of road salt on metals, the processing system may analyze possible correlations between the use of road salt in certain geographic locations versus the probability of claims relating to the body and undercarriage of a vehicle. Similarly, based on scientific or engineering principles relating to average temperatures as a function of geographic location and season, the processing system may seek a correlation relating ICC claims to particular geographic locations and seasons.

Other possibilities for selecting variable and risk factor pairings include processing with respect to lists of potentially relevant variables and risk factors. In this regard, the processing system may iteratively select pairings from such lists so as to analyze as many permutations of variable and risk factor pairings as possible. Such selection may be accomplished on a random basis or may be pursued on a weighted basis based on the numbers of contracts involving the various variables and risk factors. As a still further alternative, selection may be accomplished by the processing system without reference to a list, such as by operation of an artificial intelligence or cognitive tool, e.g., such as a heuristic engine, for inferring a potential correlation relationship.

After a variable and risk factor pairing has been selected, the processing system analyzes (110) the pairing to determine whether there is a significant correlation. To identify and quantify any such correlations, the processing system may implement one or more of a variety of conventional statistical and analytical tools. Examples of such tools are provided below. Such tools may be executed on a priority based structure. For example, as new data becomes available, the processing system may first run a usual set of routines and then, in its "free time" reorder data and attempt to find new correlations. In many cases, the process of selecting pairings and identifying/quantifying correlations may be an iterative process as generally indicated by the feedback loop 112. Such iterations may relate to processing an item of new data relative to various routines, or testing a correlation hypothesis relative to a series of data points.

The illustrated feedback loop 112 specifically relates to the process for identifying new correlations. In this regard, if a particular pairing does not reveal a correlation, then a new pairing is selected and this is process is repeated until a correlation is identified. When this analysis identifies and/or quantifies a correlation, the correlation can be reported at 114 to any interested parties and/or stored for future use. The nature of the report will vary depending on, for example, the nature of the correlation and the business context. In the case of the automobile warranty business, a report may be transmitted to analysts within an enterprise, for example, by e-mail, facsimile or by publishing a correlation alert via a private or public network. In some cases, the report may provide a graphical representation of the identified correlation or an equation or algorithm for quantifying and applying the correlation with respect to particular types of warranty transactions.

The analysts can then use the correlation information at 116 for making risk related decisions. For example, from the correlation analysis there may emerge a pricing policy that is environmentally based and can better reflect the risks of individual part failures and thereby allowing more accurate assessment of the profit margin for a particular vehicle in a particular operating region. Such information can provide the basis for sound business decisions and enhanced risk management.

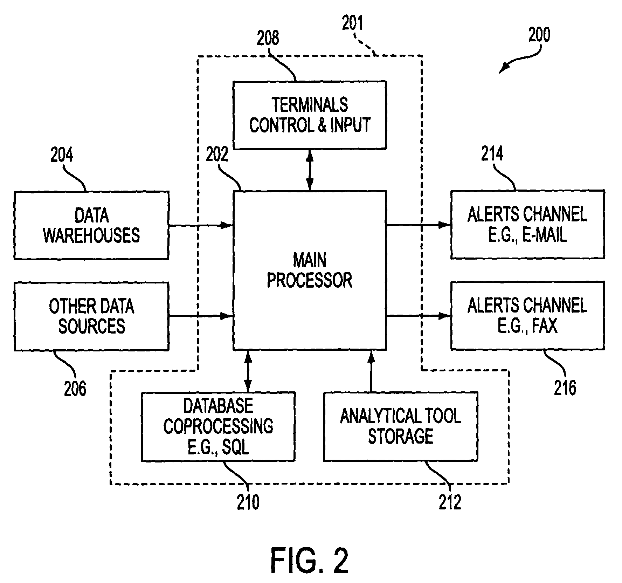

Fig. 2 illustrates an exemplary architecture for a risk assessment system 200 in accordance with the present invention. Generally, the system 200 includes a processing unit 201 including main processor 202 that receives inputs from various sources 204 and 206 and provides outputs via various channels 214 and 216. The processing unit 201 also receives inputs from certain internal terminals 208 and interfaces with internal processing and storage elements 210 and 212, respectively.

In the illustrated embodiment, the processing unit 201 receives inputs from data warehouses 204 and other data sources 206. In the context of the automobile warranty business, the data warehouses may include databases of raw data relating to warranty transactions and claims as well as previously derived relationships based on such raw data. For example, the main processor 202 may be capable of accessing the data warehouses in order to obtain information regarding transactions from a particular locale, regarding a particular vehicle type, regarding claims processed by a particular claims adjuster, etc. To this end, the data stored in the warehouses 204 may be searchable by field or in a variety of other conventional manners.

The other data sources 206 may include data from any of the various sources that have been described above. Such data may include published reports and studies and other external sources of environmental, demographic and other data. Although not shown, the system 200 may include an interface to a private or public network for accessing such data.

The main processor 202 preferably includes a high speed processor capable of multitasking operation.

Many appropriate processors are and will become available. The terminals 208 may each include a keyboard, mouse, touch screen or any other appropriate data input mechanisms for allowing a user to input data, searching instructions and other information to the main processor 202. In this regard, a standard user interface may be provided for facilitating entry of appropriate instructions. For example, the user interface may include screens for allowing a user to identify particular variables and risk factors to be searched, as well as sources of information to be considered with respect to a particular risk assessment.

Based on such inputs, or based on variable and risk factor pairings substantially autonomously selected by the processor 202, the processor 202 can access the database coprocessing unit 210 and analytical tool storage 212 to execute a correlation analysis. The database coprocessing unit 210 is provided to execute certain processing tools. In this regard, some specific architectures are better suited for certain processing techniques. The data base coprocessing unit 210 may include specific compiling subsystems and logic for executing routines in highly specialized languages such as SQL. The analytical tool storage 212 stores a variety of conventional correlation routines. Some examples of particular correlation analysis algorithms will be provided below.

Upon identifying and/or quantifying particular correlations, the main processor 202 is operative for alerting analysts or other interested individuals via a variety of channels. In the illustrated embodiment, these channels include a data channel 214 and a facsimile channel 218. It will be appreciated that the facsimile channel 216 may be useful for reporting alerts to remote locations, where data ports may be unavailable. Although not illustrated, it is also possible to provide correlation outputs to a printer for producing hard copies, to a dedicated correlations database, or to displays associated with the terminals 208.

In order to further illustrate the invention, the following example is provided with respect to a particular correlation analysis relating ICC claims to certain temperature/ geographic information. Where appropriate, the architecture of Fig. 2 is referenced in the following example. For this prophetic example, it is assumed that the processing system 201 has access to an environmental database and a claims database. The claims database would be resident, for example, in the data warehouses 204. The environmental database may resident in the other data sources 206 and, more specifically, may be accessed via a private or public network.

The environmental database is taken to contain the following variables for each geographic area (in this case, a state or are of the most populous cities within a state) of interest:

1. maximum of average of maximum temperature on a monthly basis ($T_{max}$);
2. minimum of average of minimum temperature on a monthly basis ($T_{min}$);
3. yearly average snow and sleet (S&S)(inches);
4. average relative humidity (RH) near mid-day (%);
5. normal degree days (DD);
6. yearly average total precipitation (precip)(inches);
7. average number of days in year (F) for which minimum temperature is less than or equal to 32°F; and
8. elevation above sea level (E)(feet).

For example, such data may be derived from Climates of the States, published in 1974 in two volumes by Water Information Center, Inc. which is hereby incorporated by reference. This publication includes data of mid 1960's vintage. Such data may be entered into the processing unit 201 manually by an operator. It will be appreciated that similar sources of information may be available via a private or public computer network for direct downloading to the processing unit 201. The claims data may be directly obtained from the data warehouses 204. In this case, the unit 201 may select to analyze the environmental data relative to the ICC system, as described above. In this regard, the data warehouses 204 may include a history of ICC claims organized on a state-by-state basis with respect to closed rent contracts. That is, such data may be stored such that it is searchable by field such as vehicle system (e.g., ICC system) and geographic locale (Arizona). Upon retrieving such data, the main processor 202 may execute a correlation analysis based on multivariate linear regression, as described, for example, in Applied Multivariate Statistical Analysis, Third Edition, Richard A. Johnson and Dean W. Wichern, Prentice Hall, 1992, which is incorporated herein by reference. Analytical tools corresponding to such techniques may be stored in the analytical tool storage 212. Using such analysis, the system 200 can fit the dependent variables of interest (variables and/or risk factors) to a subset of the eight environmental variables noted above.

The equations may be derived by successive weighted least square refinements by excluding independent environmental variables with p-values greater than 0.01. The p-values reflect the probability of committing a Type 1 error, the rejection of a null hypothesis when it is indeed true. A small p-value is indicative that the independent variable is not exhibiting a chance correlation but "belongs" to the set of variables that influence the dependent variable. Excluding independent variables with p-values greater than 0.01 simplifies processing by eliminating environmental variables having insignificant correlations with respect to the risk factor of interest. It will be appreciated that the value 0.01 represents a somewhat arbitrary limit on correlation significance that will be considered.

The resulting equation for average number of claims for ICC per contract, $\bar{ICC}$ is

$$\bar{ICC} = -1.60 + 0.0135 \cdot t_{max} + 0.0116 \cdot t_{min} + 0.00432 \cdot RH + 0.00369 \cdot S\&S \qquad (1)$$

This result (the above equation) can then be reported as a "significant correlation alert" via the channels 214 and/or 216.

In accordance with the present invention, such correlations may be further explored, for example, based on scientific and engineering principles, to identify further correlations of interest. Thus, having discovered that ICC claims appear to be especially sensitive to temperature and noting that the ICC system also involves relatively high repair costs, the system 200 may search for a seasonality effect. Thus, based on operation of logic executed on main processor 202, the system 200 may elect to consider Arizona, a state with a large seasonal temperature variation. Table 1 presents temperature data taken at Sky Harbor Airport in Phoenix:

| | | | | | | | | | | | (1) |
|---|---|---|---|---|---|---|---|---|---|---|---|
| Ja | Fe | Ma | Ap | Ma | Jn | Ju | Au | Sp | Oc | No | Dc |
| 64.0 | 68.1 | 75.0 | 83.9 | 92.9 | 101.6 | 104.6 | 101.6 | 98.2 | 86.7 | 73.7 | 66.1 |

Table 2 presents ICC claim data per month for a set of closed contracts on Arizona vehicles:

| | | | | | | | | | | | (2) |
|---|---|---|---|---|---|---|---|---|---|---|---|
| Ja | Fe | Ma | Ap | Ma | Jn | Ju | Au | Sp | Oc | No | Dc |
| 1.8 | 2.2 | 5.6 | 10.4 | 13.4 | 12.7 | 16.8 | 15.8 | 9.3 | 6.8 | 3.0 | 2.2 |

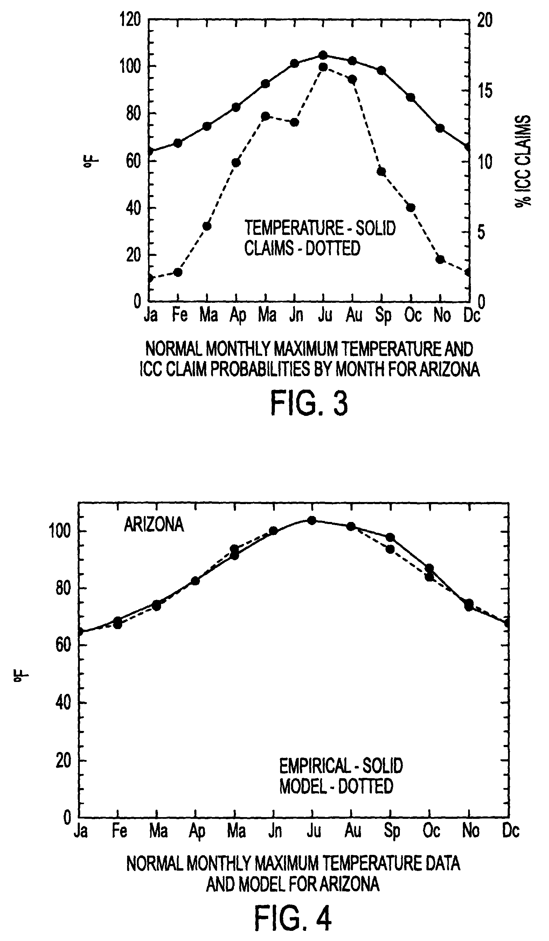

Fig. 3 graphically illustrates the correlation between normal monthly maximum temperature and ICC claim probabilities by month for Arizona. The graph shows that claims are directly related to average monthly maximum temperature. Specifically, the maximum percentage of ICC claims matches the maximum normal monthly maximum temperature, i.e., corresponding to the month of July. Also, the minimum percentage ICC claims correspond to the months having the lowest normal monthly maximum temperature, i.e., December and January.

The data of Fig. 3 suggests a dependency and that a seasonality effect might obtain. In this regard, a quick assessment of the dependency can begin by computing the linear correlation coefficient $\rho$. This coefficient is defined in <u>Numerical Recipes: The Art of Scientific Computing (Fortran Version)</u>, W.H. Press, B.P. Flannery, S.A. Teukolsky and W.T. Vertterling, Cambridge University Press, 1959, which is incorporated herein by reference. For two variables, x and y, the coefficient is given by:

$$\rho = 4285 \frac{\sum_i (x_i - \bar{x})((y_i - \bar{y})}{\sqrt{\sum_i ((x_i - \bar{x})^2} \sqrt{\sum_i (y_i - \bar{y})^2}} \qquad (2)$$

The linear correlation coefficient for the data displayed in Fig. 3 is $\rho = 0.939$ indicating an extremely high degree of linear correlation. It can be verified that r computed for the data set $\{x_i, y_i\}$ will be invariant under the transformation

$$y \leftarrow ay + b \qquad (3)$$

in which the y variable is replaced by a non-zero multiple, a, of itself, a scale factor, and a constant offset b. Therefore the system 200 may seek a simple (linear) model that will directly relate claims to normal monthly maximum daily temperature.

To this end, a model may be developed for the normal maximum daily temperature. Based on the physics describing the earth's seasonal path about the sun, it may be postulated that the normal monthly maximum daily temperature, $t_{max}$, might be well modeled by a sinusoidal function, in particular,

$$T_{max} = \frac{Y_{min}+Y_{max}}{2} - \frac{Y_{min}-Y_{max}}{2} \cos\left(2\pi \cdot \frac{i}{12}\right) \tag{4}$$

where

- $i$ is the month. For January, $i=0$; for December, $i=11$,
- $T_{max}$ is the normal maximum daily temperature for the i-th month,
- $T_{min}$ is the minimum of the normal maximum daily temperatures over the entire year,
- $Y_{max}$ is the maximum of the normal maximum daily temperatures over the entire year.

The system 200 can then apply this simple temperature model to the Arizona temperature data and measure a linear correlation coefficient of $p=0.995$. This fit is shown in Fig. 4.

This correlation can then be used for claims prediction. In this regard, if $C_i$ is the actual percentage of claims in a particular state in the i-th month, then:

$$\bar{c}_i = a + b\left[\frac{Y_{min}+Y_{max}}{2} - \frac{Y_{min}-Y_{max}}{2}\cos\left(2\pi\frac{i}{12}\right)\right] \tag{5}$$

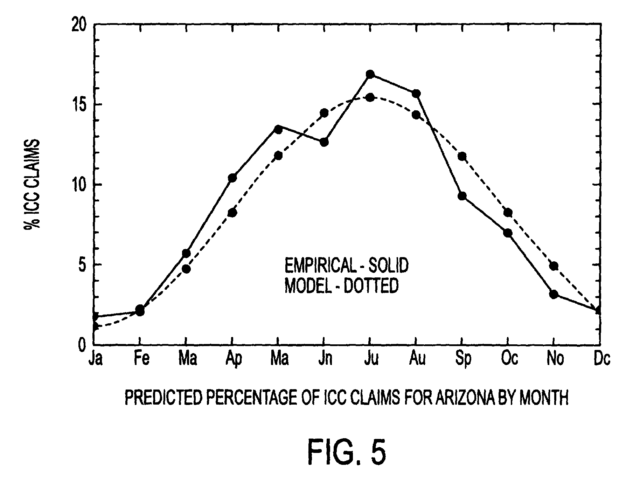

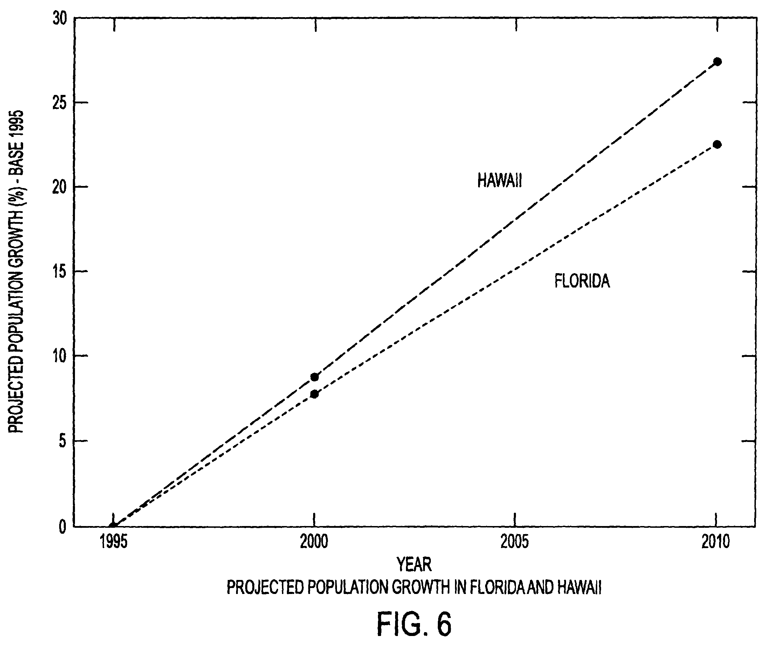

where $\bar{c}_i$ is the estimated number of claims for the i-th month and a and b are constants which will be a function of the specific state. Upon performing a least squares fit (the data is presented in Fig. 5), the system 200 achieves a linear correlation coefficient of $\rho=0.922$ and reports this as a significant correlation alert. Such correlations may also be used to provide trend projections that can be used for planning and for prospective contract pricing. Fig. 6 shows such a trend projection. Specifically, it may be determined that Hawaii and Florida will be the highest impact states with respect to the identified ICC correlation, based on temperature and population. Fig. 6 shows projected population growth for the states. The identified and quantified correlation may be used in conjunction with the projected population growth to estimate projected increases in claim costs, which increases can then be compensated through appropriate contract pricing.

While various embodiments of the present invention have been described in detail, it is apparent that further modifications and adaptations of the invention will occur to those skilled in the art. However, it is to be expressly understood that such modifications and adaptations are within the spirit and scope of the present invention.

**Claims**

1. An apparatus for use in risk assessment, including:

   a computer system for identifying correlations between particular input variables and target risk factors, where the variables may have an effect on the risk factors;
   means for receiving at said computer system variable information regarding a number of said variables and risk factor information regarding a number of risk factors;
   a processor, associated with said computer system, for selecting at least one of a candidate variable and a candidate risk factor of a variable/risk factor pairing;
   said processor further being operative for making a determination as to whether a potential correlation exists between the candidate variable and the candidate risk factor; and
   output means, associated with said computer system, for providing an output reflecting said determination regarding said potential correlation, whereby said potential correlation can be used for risk assessment.

2. An apparatus as claimed in claim 1, wherein the processor is operative for selecting both the candidate variable and the candidate risk factor.

3. An apparatus as claimed in any one of claims 1-2, wherein the processor is further operative for iteratively selecting variable/risk factor pairings for correlation analysis.

4. A method for use in risk assessment, including the steps of:

providing a processing system for identifying correlations between particular input variables and target risk factors where the variables may have an effect on the risk factors;

receiving said processing system variable information regarding a number of said variables and risk factor information regarding a number of said risk factors;

first operating a the processing system to select one of a candidate variable and a candidate risk factor of a variable/risk factor pairing;

second operating the processing system to make a determination as to whether a potential correlation exists between the candidate variable and candidate risk factor; and

providing an output reflecting said determination regarding said potential correlation, whereby said potential correlation can be used for risk assessment.

5. A method as claimed in claim 4, wherein the step of receiving includes the step of accessing a database of archived data regarding real world events.

6. A method as claimed in any one of claims 1-2, wherein the step of receiving includes accessing information of one of the following types with regard to one of the variables and risk factors: continuous, numerical, discrete, fuzzy numerical, binary and class identification.

7. A method as claimed in any one of claims 4-6, wherein the step of receiving includes receiving variable information selectively entered by a user for risk assessment analysis by the processing system.

8. A method as claimed in any one of claims 4-7, wherein the step of receiving includes instructing the processing system to search for external sources of data regarding one of the variables and the risk factors.

9. A method as claimed in any one of claims 4-8, wherein the step of receiving includes accessing data regarding one of the variables and risk factors via a public network.

10. A method as claimed in any one of claims 4-9, wherein the step of using the output includes establishing pricing for auto warranty related transactions.

FIG. 1

FIG. 2

NORMAL MONTHLY MAXIMUM TEMPERATURE AND
ICC CLAIM PROBABILITIES BY MONTH FOR ARIZONA

FIG. 3

NORMAL MONTHLY MAXIMUM TEMPERATURE DATA
AND MODEL FOR ARIZONA

FIG. 4

PREDICTED PERCENTAGE OF ICC CLAIMS FOR ARIZONA BY MONTH

FIG. 5

EP 1 014 287 A2

EP 1 014 287 A2

PROJECTED POPULATION GROWTH (%) - BASE 1995

30

25

20

15

10

5

0

HAWAII

FLORIDA

1995          2000          2005          2010

YEAR

PROJECTED POPULATION GROWTH IN FLORIDA AND HAWAII

FIG. 6